# EUROPEAN PATENT SPECIFICATION

(11) **EP 0 954 081 B1**
(45) Date of publication and mention of the grant of the patent: **29.10.2003**
(21) Application number: 99303292.9
(22) Date of filing: 27.04.1999
(51) Int. Cl.: H02H 9/04, H02J 7/00

(54) **Improved efficiency in power switching circuits**
Verbesserter Wirkungsgrad in Leistungsschaltern
Rendement amélioré dans des circuits interrupteur de puissance

(30) Priority: 29.04.1998 KR 9815305
(43) Date of publication of application: 03.11.1999
(73) Proprietor: Samsung Electronics Co., Ltd., Suwon, Kyungi-do (KR)
(72) Inventor: Lee, Chang-Hum, 208-404, Buyoung Apt., Ahnyang-shi, Kyunggi-do (KR)
(74) Representative: Tunstall, Christopher Stephen

(56) References cited:
- GB-A- 2 313 721
- US-A- 5 539 299
- PATENT ABSTRACTS OF JAPAN vol. 1995, no. 07, 31 August 1995 (1995-08-31) & JP 07 095732 A (SANYO ELECTRIC CO LTD), 7 April 1995 (1995-04-07)
- PATENT ABSTRACTS OF JAPAN vol. 1997, no. 03, 31 March 1997 (1997-03-31) & JP 08 294241 A (SONY CORP), 5 November 1996 (1996-11-05)

## Description

The present invention relates to electrical or electronic systems, and more particularly, to systems having two power sources, such as a battery and an AC adaptor.

Many such systems are known. For example JP 07095732 which describes a way of selecting which of the two power sources supplies power to a load. GB 2313721 discloses a switch circuit and a method of operating it having the features defined in the preambles of claims 1, 2 and 9.

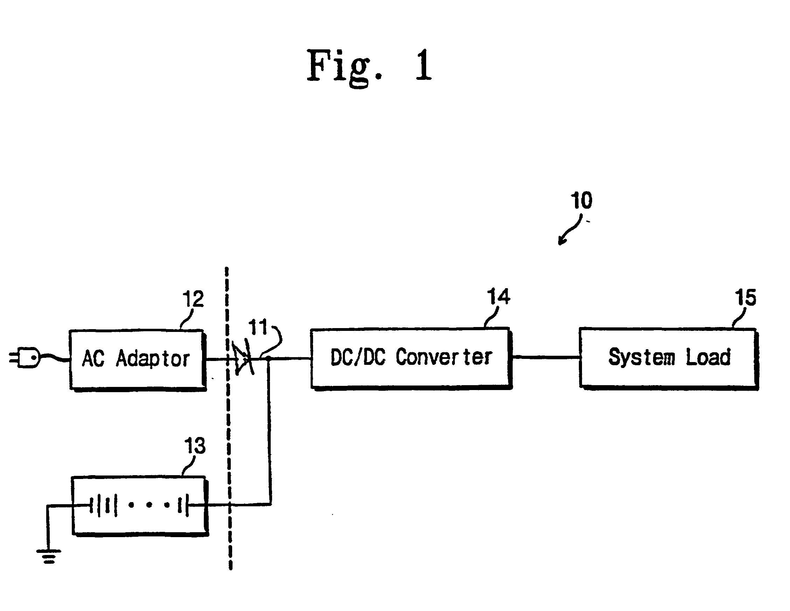

Fig. 1 is a schematic diagram of an electronic system having a general power supply unit. In Fig. 1, power for the electronic system 10 is supplied by an external power source, that is, an AC adaptor 12, or a battery 13 (which may be a backup battery). The AC adaptor 12 is a device that converts an AC voltage from an external power source into a DC voltage. The AC adaptor 12 is connectable via a power supply line 11 to the electronic system 10. The electronic system 10 comprises a DC/DC converter 14 connected to power supply line 11. The DC/DC converter 14 is a device that controls the voltage that is supplied to the system load 15.

More specifically, the DC/DC converter 14 is coupled by supply line 11 to both the AC adaptor 12 and the battery 13. The DC/DC converter 14 reduces the voltage (for example, 19V), of the external power source (AC adaptor 12), or the voltage (for example, 7.4V to 15V) of the battery 12, to a constant voltage level (for example, 5V or 3.3V) that is appropriate for the operation of the system load 15.

The system load 15 represents the component in the electronic system 10 that consumes power and is driven by the constant DC voltage which is supplied by the DC/DC converter 14. If the electronic system 10 is a notebook computer, then a CPU, a memory, a display or individual peripherals are included as part of the system load 15.

In an electronic system that receives, in parallel, the output voltages of the AC adaptor 12 and the battery 13, means are required to prevent the flow of a reverse current caused by a voltage difference between the output voltages of the two power sources. In particular, when the battery 13 is supplying power, means must be provided to prevent a current back flow from the battery 13 to the AC adaptor 12 via the power supply line 11. Such a reverse current would result in wasteful power consumption by the AC adaptor 12, and wasteful discharge of the battery 13, which has a finite capacity.

Generally, a diode is inserted into the power supply line 11 of the external power source (AC adaptor 12) to allow only one direction of current flow: from the AC adaptor 12 to the DC/DC converter 14. In this way, when the output voltage of the battery 13 is higher than that of the AC adaptor 12, a back flow of current into the AC adaptor 12 is prevented or at least reduced.

However, any diode will introduce a voltage drop across its terminals when forward biased. It will dissipate power according to the forward voltage drop and the current it is carrying.

The diode may be a Schottky diode or a fast recovery diode. Since the voltage drop in the forward direction for the Schottky diode is relatively low (0.4V to 0.5V), this diode can effectively reduce the power that is wasted. Even so, the Schottky diode will dissipate power and will heat up. At high temperatures, reverse current through the Schottky diode is increased, so that the prevention of reverse current flow is not effective. On the other hand, although the voltage drop of a fast recovery diode in the forward direction is large (0.8V to 1.0V) (and so power dissipation and heating will be greater), current back flow is substantially lower when compared with that for a Schottky diode, even at high temperatures. Thus, a fast recovery diode can be used. A fast recovery diode, however, may become overheated because the voltage drop in the forward direction causes consideration power consumption. For example, with a 40W AC adaptor 12 supplying a current of 3A, the power consumed by a fast recovery diode is 2.4W to 3.0W (3A × 0.8V to 1.0V), such that a heat sink (for example, a cooling pan or a metal plate) is required.

As described above, a fast recovery diode or a Schottky diode is employed to prevent a reverse current flow from the battery 13 to the AC adaptor 12. However, since heat is generated by each of these diodes, means to discharge this heat is required, entailing expense in manufacture, wasteful power consumption, and unwanted heating of the equipment.

It is therefore an aim of the present invention to provide a system which may be powered by a battery, and an external power source such as an AC adaptor. Such a system preferably has an improved power efficiency and a reduced power dissipation and loss. Preferably, the heat generated by diodes, themselves used for preventing or reducing a current back flow, is reduced.

According to a first aspect of the present invention there is provided a switch circuit for use with a battery and an external power supply, the switch circuit comprising:
a power supply line;
a diode;
a first switch;
a voltage detector for detecting whether a voltage supplied by an external power supply is higher than a predetermined level, and generating a detection signal as a result; and
a switch controller receiving the detection signal, for controlling the ON/OFF condition of the first switch; characterised in that the diode is coupled in series between the power supply line and a terminal for coupling to an external power supply; the first switch is coupled parallel with the diode, the first switch having a voltage drop when conductive, lower than that of the diode; the switch controller controls the ON/OFF condition of the first switch so as to bring the switch into an ON condition whenever the voltage supplied by the external power supply is higher than the predetermined level; and wherein said diode comprises a Schottky diode or fast recovery diode having an anode connected to said terminal and a cathode connected, when said first switch is in an OFF condition, to said battery; whereby said diode reduces current back flow from said battery to said external power supply.

According to a second aspect of the present invention there is provided a switch circuit for use with a battery and an external power supply, the switch circuit comprising:
a power supply line;
a diode;
a first switch; and
a switch controller receiving a detection signal, for controlling the ON/OFF condition of the switch characterised in that the diode is coupled in series between the power supply line and a terminal for coupling to an external power supply; the first switch is coupled in parallel with the diode, the switch having a voltage drop when conductive, lower than that of the diode; the switch further comprising a current detector for detecting whether a current supply by an external power supply is higher than a predetermined level, and generating the detection signal as a result so as to bring the switch into an ON condition whenever the current supplied by the external power supply is higher than the predetermined level; and wherein said diode comprises a Schottky diode or fast recovery diode having an anode connected to said terminal and a cathode, when said first switch is in an OFF condition, to said battery; whereby said diode reduces current back flow from said battery to said external power supply.

According to a third aspect of the present invention there is provided a method of operating a switch circuit for providing power from a power supply to a power supply
a diode; and
a first switch
the method comprising the steps of:
detecting whether a voltage, or a current, supplied by the power supply is higher than a predetermined level; and
controlling the ON/OFF condition of the first switch; characterised in that said diode is coupled in series between the power supply line and a terminal for coupling to the power supply and the switch is coupled in parallel with the diode, the switch having a voltage drop when conductive, lower than that of the diode wherein the method further comprises the step of controlling the ON/OFF condition of the first switch so as to bring the switch into an ON condition whenever the voltage, or current, respectively, supplied by the external power supply is higher than the predetermined level; and wherein said diode comprises a Schottky diode or fast recovery diode having an anode connected to said terminal and a cathode, when said first switch is in an OFF condition, to said battery; whereby said diode reduces current back flow from said battery to said external power supply.

The switch circuit may further comprise a second switch for coupling the power supply line to a battery; and a second switch controller receiving the detection signal, for controlling the ON/OFF condition of the second switch so as to bring the second switch into an OFF condition when the voltage or current supplied by the external power supply is higher than the respective predetermined level.

The system may further comprise a voltage converter coupled to the system load, for controlling a voltage supplied to the system load.

The system may be a computer system.

The system load may comprise a memory, a direct memory access controller and a peripheral.

The system may be a portable system.

The objects, characteristics and advantages of the present invention will become apparent in the following description of certain embodiments, given by way of examples only, with reference to the accompanying drawings, in which:
Fig. 1 shows a schematic diagram of an electronic system having a general power supply unit;
Fig. 2 is a block diagram illustrating the configuration of a computer system according to an embodiment of the present invention;
Fig. 3 shows an embodiment of a switch circuit illustrated in Fig. 2;
Fig. 4 shows an embodiment of a first switch controller illustrated in Fig. 3;
Fig. 5 shows an embodiment of a battery charging circuit illustrated in Fig. 2; and
Fig. 6 shows an embodiment of a switch controller illustrated in Fig 5.

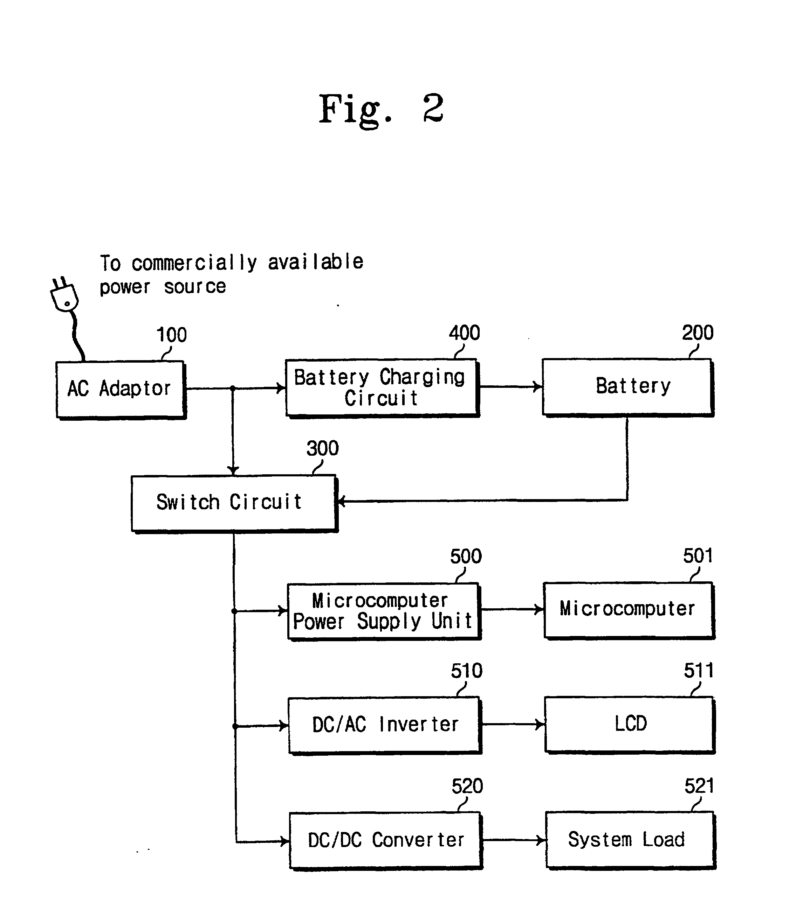

Fig. 2 is a block diagram illustrating a computer system according to an embodiment of the present invention. In Fig. 2, an AC adaptor 100, connectable to the computer system, is connected to a commercially available external power source (not shown), such as an AC mains supply. The adaptor 100 rectifies and smoothes an AC voltage from the external power source to supply a DC voltage to the computer system.

The battery 200 can be recharged, optionally rapidly charged, by a battery charging circuit 400. Both battery 200 and battery charging circuit 400 can be built into the computer system. If the AC adaptor 100 is not connected to the computer system, or is not operating, and the battery 200 is connected, a DC voltage is supplied through a switch circuit 300 from the battery 200 to the respective components of the computer system in order to activate the computer system. A nickel-hydrogen battery is used as the battery 200, for example.

As shown in Fig. 2, a microcomputer power supply unit 500, a microcomputer 501, a DC/AC inverter 510, a liquid crystal display (LCD) 511, a DC/DC converter 520, and a system load 521 are further provided in the computer system. Although not shown in the figure, the system load 521 may typically comprise a ROM (read only memory) for storing a control program inherent to the computer system, a RAM (random access memory), a direct memory access controller (DMAC) for performing the direct memory access control, a programmable interrupt controller (PIC) settable by a program, an expansion RAM with a large capacity and connectable to a special card slot, and a backup RAM for storing backup data, etc to implement a resume function.

The switch circuit 300 delivers a DC voltage from the AC adaptor 100, or a DC voltage from the battery 200, to the respective components of the computer system. In particular, when the AC adaptor 100 is connected to the computer system, the switch circuit 300 supplies the DC voltage from the AC adaptor 100 to the respective components of the computer system, while it stops supplying the DC voltage from the battery 200. If the AC adaptor 100 is detached from the computer system, the switch circuit 300 supplies the DC voltage from the battery 200 to the microcomputer power supply unit 500, the DC/AC inverter 510, and the DC/DC converter 520.

### Switch Circuit

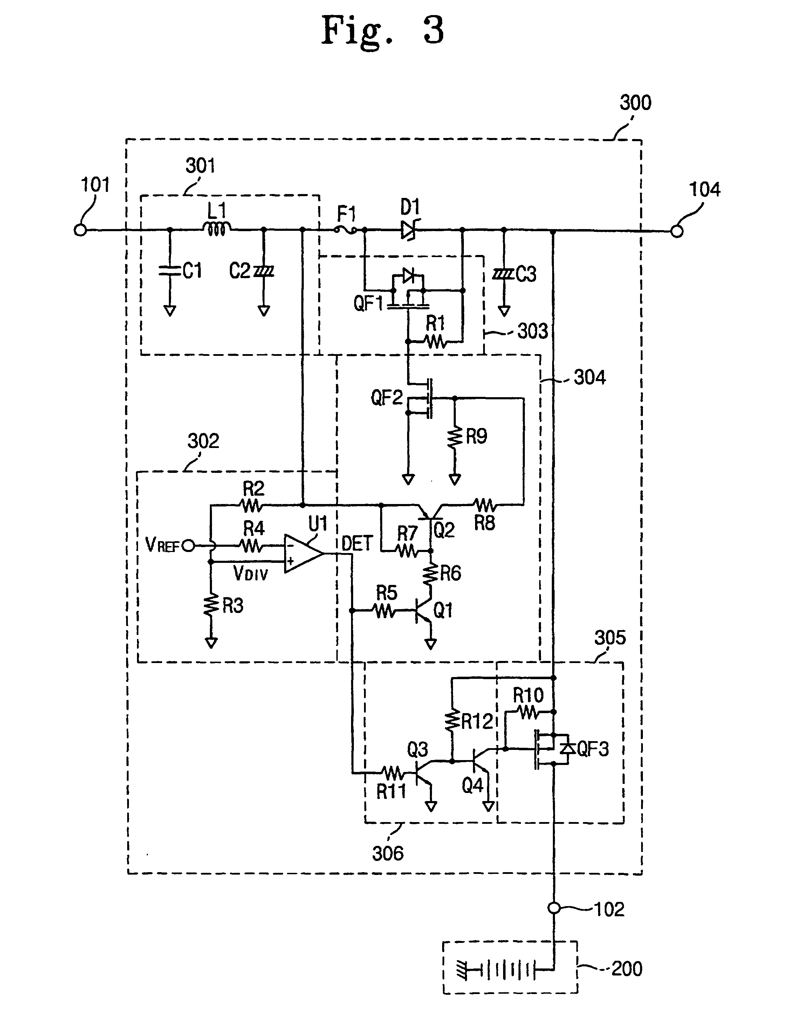

Fig. 3 is an embodiment of the switch circuit 300 according to an aspect of the present invention. The switch circuit 300 has a first input terminal 101 for connection with the AC adaptor 100; a second input terminal 102 for connection with the battery 200; and an output terminal 104 (or a power supply line) connected to, for example, the DC/DC converter 520. The switch circuit 300 connects the power supply line 104 to the AC adaptor when the AC adaptor 100 is connected to the input terminal 101. When the AC adaptor 100 is detached from the input terminal 101, the switch circuit 300 connects the power supply line 104 to the battery 200.

A filter 301 is coupled to the input terminal 101 and percolating a noise of the DC voltage. A fuse F1 is coupled between the filter 301 and a diode D1, itself coupled between the fuse F1 and the power supply line 104. Diode D1 prevents or reduces current back flow from the battery 200 to the AC adaptor 100. The diode D1 is preferably composed of a Schottky diode or a fast recovery diode.

A voltage detector 302, first and second switches 303 and 305 and first and second switch controllers 304 and 306 are further provided in the switch circuit 300.

The voltage detector 302 in this embodiment comprises three resistors R2, R3 and R4 and an operational amplifier or "op-amp" U1 (acting as a comparator). One end of the resistor R2 is connected via the filter 301 to the input terminal 101, and the other end of the resistor R2 is connected to the non-inverting input of the op amp U1, and through the resistor R3 to ground. With this arrangement, the resistors R2 and R3 act as a voltage divider so as to supply a divided voltage V_{DIV} to the non-inverting input of the op amp U1. Further, the inverting input of the op amp U1 receives a reference voltage V_{REF} through the resistor R4. The reference voltage V_{REF} is a voltage used as a power supply of the microcomputer 501.

When the inverting input voltage V_{REF} of the op amp U1 is higher than the non-inverting input voltage V_{DIV} thereof, (such as when the AC adaptor is not connected and the battery 200 is supplying power), the op amp U1 outputs a signal DET of a logical low level as a detection result. When the inverting input voltage V_{REF} of the op amp U1 is lower than the non-inverting input voltage V_{DIV} thereof, the op amp U1 outputs the signal DET of a logic high level. Such a high level signal indicates that the AC adaptor 100 is supplying power.

The switch 303 in this embodiment is provided by a P-channel power MOSFET transistor QF1 having a drop voltage of about 0.014V, and a resistor R1. The drain of the FET switch QF1 is connected to the input terminal 101 via the fuse F1 and the filter 301. The gate of FET switch QF1 is coupled to the corresponding switch controller 304, and the source of the FET switch QF1 is coupled to the power supply line 104. The resistor R1 is coupled between the source and the gate of the FET switch QF1. The drain of the transistor QF1 is coupled to an anode of the diode D1 and the source of the transistor QF1 is connected to a cathode of the diode D1. The source and body of transistor QF1 are connected together. Fig. 3 illustrates the drain/source diode, inherent in FET transistors, in parallel with the channel.

When the MOSFET transistor QF1 is not biased (is turned off), a current from the AC adaptor 100 is transferred via the diode D1, having a forward voltage drop of about 0.5V, to the power supply line 104, that is, the computer system. If the transistor QF1 is biased (is turned on), almost all the current from the AC adaptor 100 flows to the power supply line 104 via the FET transistor QF1 instead of via the diode D1.

Referring to Fig. 3, the first switch controller 304 receives the output signal DET from the voltage detector 302, and controls the ON/OFF condition of the FET transistor QF1 in the switch 303 so as to bring the transistor QF1 into an ON condition when the voltage of the AC adaptor 100 is higher than the reference voltage V_{REF} (ie when DET is high). The switch controller 304 controls the activation and inactivation of the switch circuit 303 in response to the signal DET from the voltage detector 302. The controller 304 comprises of five resistors R5 to R9, an N-channel FET transistor QF2, an NPN transistor Q1 and a PNP transistor Q2.

One end of resistor R5 is connected to the output DET of the voltage detector 302, and the other end of resistor R5 is coupled to a base of the transistor Q1 whose emitter is grounded. The collector of the transistor Q1 is connected via resistor R6 to the base of transistor Q2, whose emitter is connected to the input terminal 101 through the filter 301. Resistor R7 is connected between the emitter and the gate of the transistor Q2. The FET transistor QF2 has its gate connected via resistor R8 to the collector of transistor Q2, and has its drain coupled to the gate of the FET transistor QF1. Its source and body terminals are grounded. Further, the gate of the transistor QF2 is connected to ground via resistor R9.

When the signal DET from the voltage detector 302 is at a logic low level, that is, the inverting input voltage V_{REF} of the op amp U1 is higher than the non-inverting input voltage V_{DIV}, (indicating that AC adaptor 100 is not providing power), the transistors Q1 and Q2 are turned off. The transistor QF2 is also turned off, so that no bias voltage is applied between the gate and the source of the FET transistor QF1. Accordingly, FET transistor QF1 is turned off.

On the other hand, when the signal DET is at a logic high level, that is, the inverting input voltage V_{REF} of the op amp U1 is lower than the non-inverting input voltage V_{DIV}, (indicating that AC adaptor 100 is providing power), the transistors Q1 and Q2 are turned on. The FET transistor QF2 is turned on, and a bias voltage is applied between the gate and the source of the FET transistor QF1, caused by a current flowing from line 104 through resistor R1 to ground, via transistor QF2 and resistor R9. The FET transistor QF1 is turned on.

Second switch 305 is connected between the power supply line 104 and the input terminal 102. Switch 305 is comprised of a resistor R10 and a P-channel power FET transistor QF3. The source of the FET transistor QF3 is connected to the power supply line 104 and the drain is connected to the terminal 102. The gate of the FET transistor QF3 is connected to the second switch controller 306. The gate and the source of the transistor QF3 are also connected together through resistor R10. The source and body of transistor QF3 are connected together. Fig. 3 illustrates the drain/source diode, inherent in FET transistors, in parallel with the channel.

The second switch controller 306 receives the output signal DET from the voltage detector 302 and controls the ON/OFF condition of the FET transistor QF3 in the second switch 305. FET transistor QF3 is turned OFF by a high level signal DET when the voltage V_{DIV} representing the voltage of the AC adaptor 100 is higher than the reference voltage V_{REF}. The controller 306 is comprised of two resistors R11 and R12 and two NPN transistors Q3 and Q4. The base of the transistor Q3 is connected to the DET output of the voltage detector 302 through the resistor R11. The emitter of transistor Q3 is grounded, and the collector is connected to the base of transistor Q4. The emitter of transistor Q4 is grounded and the collector is coupled to the gate of the FET transistor QF3. Further, the collector of the transistor Q3 and the base of the transistor Q4 are coupled via resistor R12 to the source of the FET transistor QF3 and the power supply line 104.

When the output signal DET from the voltage detector 302 is at a logic high level (indicating that the AC adaptor 100 is supplying power), a bias voltage is applied between the base and the emitter of the transistor Q3 and the base of the transistor Q4 is grounded by conduction through transistor Q3. The transistor Q4 is turned off. No bias voltage is applied between the gate and the source of FET transistor QF3, and the FET transistor QF3 is turned off. The AC adaptor 100 is supplying power through diode D1 and/or FET transistor QF1.

On the other hand, when the signal DET is at a logic low level (indicating that the AC adaptor is not supplying power), the transistor Q3 is turned off. Since the transistor Q4 is biased by battery 200 through the diode of FET transistor QF3 and resistor R12, it is turned on. A bias voltage is applied between the gate and the source of FET transistor QF3, and it is turned on. A current flows via the turned-on FET transistor QF3 from the battery 200 to the power supply line 104.

The operation of a switch circuit 300 according to an embodiment of the present invention will be more fully described.

When the AC adaptor 100 is detached from the terminal 101, (ie, it is not supplying power), the non-inverting input voltage V_{DIV} of the op amp U1 in the voltage detector 302 is maintained lower than the inverting input voltage V_{REF} of the op amp U1, so that the output signal DET of the op amp U1 becomes logically low. This forces the second switch controller 306 to activate the second switch 305. In particular, since the signal DET is at a logic low level, the transistor Q3 is turned off and the transistor Q4 is turned on as described above. A bias voltage is applied between the gate and the source, and the FET transistor QF3 is turned on. Accordingly, the power supply line 104 is connected to the battery 200.

At the same time, the first switch controller 304 forces the first switch 303 to be turned off. In particular, when the inverting input voltage V_{REF} of the op amp U1 is higher than the non-inverting input voltage V_{DIV}, the signal DET is low, and the transistors Q1, Q2 and QF2 are turned off. No bias voltage is applied between the gate and the source of FET transistor QF1, which is then turned off. A current flow from the battery 200 to the AC adaptor 100 is prevented, or at least reduced, by the diode D1, so that a current back flow from the battery 200 to the AC adaptor 100 will not occur.

On the other hand, when the AC adaptor 100 is connected and supplying power to the terminal 101, a current from the AC adaptor 100 is initially transferred via the diode D1 to the power supply line 104. The non-inverting input voltage V_{DIV} of the op amp U1 in the voltage detector 302 becomes higher than the inverting input voltage V_{REF} of the op amp U1, and the op amp U1 outputs the signal DET of a logic high level. This makes the transistor Q3 of the second switch controller 306 turned on and the transistor Q4 turned off. No bias voltage is applied between the gate and the source of the FET transistor QF3, which is turned off. Accordingly, the battery 200 stops supplying a current for the power supply line 104.

Upon receipt of the signal DET of a logic high level from the voltage detector 302, the transistors Q1, Q2 and QF2 of the first switch controller 304 are turned on as described above. A bias voltage is applied between the gate and the source of FET transistor QF1, which is then turned on. This makes almost all the current from the AC adaptor 100 flow to the power supply line 104 through the first switch 303 instead of through the diode D1. This is because the diode D1 has a forward drop voltage of about 0.5V and the FET transistor QF1 has a drop voltage of only about 0.014V.

According to the switch circuit 300 of this embodiment, when a current from the AC adaptor 100 is first supplied, it flows through the diode D1. Then, the current flows through the FET transistor QF1 of the switch 303 instead of through the diode D1. Therefore, power dissipation and loss by the diode D1 can be reduced, so that practically no heat is generated by the diode D1 while the AC adaptor 100 is supplying power. This will be further described below.

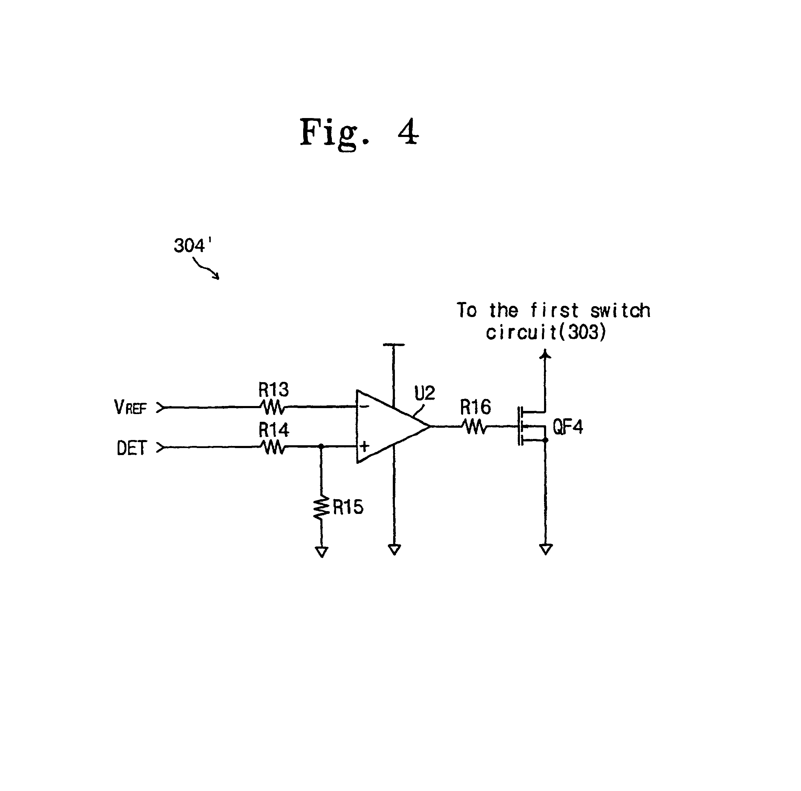

Referring to Fig. 4, another embodiment of a first switch controller is illustrated. First switch controller 304' comprises four resistors R13 to R16, one op amp U2 and an N-channel MOSFET transistor QF4 connected as illustrated in Fig. 4. When an inverting input voltage V_{REF} (such as a voltage used as power of the microcomputer 501) of the op amp U2 is higher than a non-inverting input voltage DET thereof (the output of voltage detector 302), an output of the op amp U2 becomes low and the FET transistor QF4 is turned off, forcing the first switch 303 to be inactivated. When the inverting input voltage V_{REF} is lower than the non-inverting input voltage DET , the output of the op amp U2 becomes high and the FET transistor QF4 is turned on, turning the first switch circuit 303 on.

The switch circuit 300 having the switch controller 304' of Fig. 4 performs the same switching operation as that having the switch controller 304 of Fig. 3. Further description of the switch circuit 300 having the controller 304' of Fig. 4 is thus omitted.

### Battery Charging Circuit

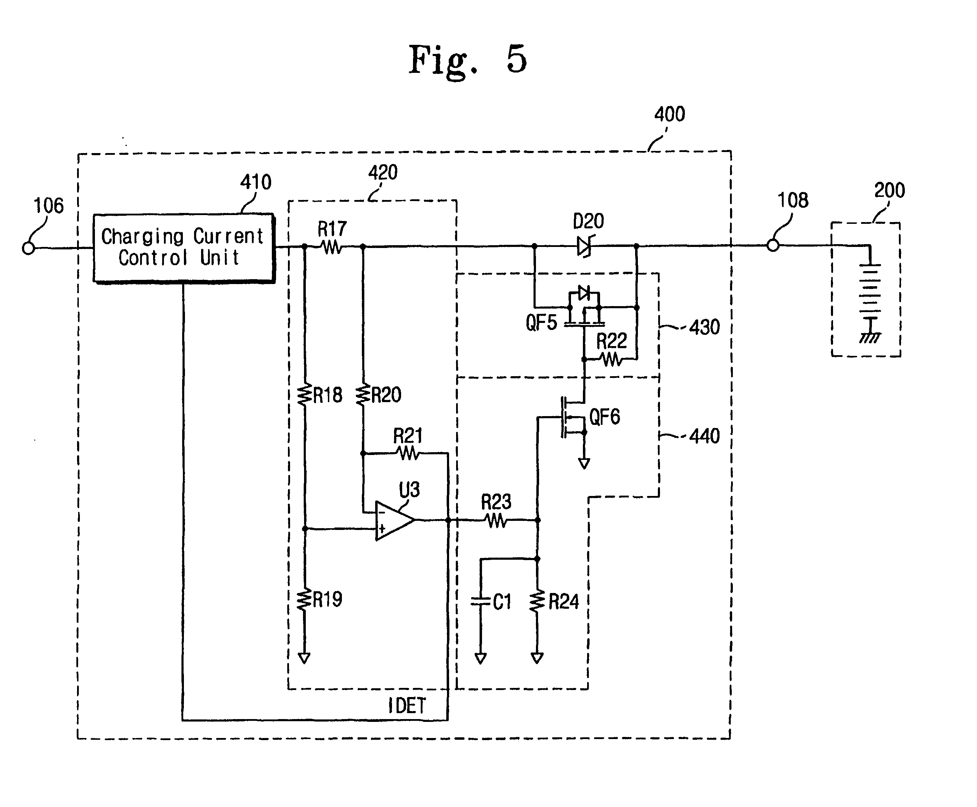

Fig. 5 shows an embodiment of a battery charging circuit according to an aspect of the present invention. The battery charging circuit 400 comprises an input terminal 106 to be connected to the AC adaptor 100 and an output terminal 108 to be connected to the battery 200. The battery charging circuit 400 comprises a diode D20, a charging current control unit 410, a current detector 420, a switch 430 and a switch controller 440. The battery charging circuit 400 starts charging the battery 200 with a charging current from the AC adaptor 100.

The diode D20 is included to prevent a reverse current from the battery 200 to the AC adaptor 100, and has a forward voltage of about 0.5V. For example, the diode D20 may be comprised of either a Schottky diode or a fast recovery diode. The charging current control unit 410 is connected to the input terminal 106 and receives current from the AC adaptor 100 to supply the charging current for the battery 200.

The current detector 420 detects whether charging current is provided from the charging current control unit 410, and generates a signal IDET as a detection result. The signal IDET is used such that the charging current control unit 410 controls the amount of the charging current in accordance with the voltage level of the signal IDET. The current detector 420 comprises a current detection resistor R17 and an operational amplifier or an "op amp" U3. The current detection resistor R17 is connected in series with the charging current control unit 410, so that it derives from the output current from the unit 410, a voltage value that is proportional to that current.

One end of the current detection resistor R17 is connected via a resistor R18 to the non-inverting input of the op amp U3. The other end of the current detection resistor R17 is connected via a resistor R20 to the inverting input of the op amp U3. Further, the non-inverting input is connected to ground via a resistor R19, and the output of the op amp U3 is fed back to the inverting input through a resistor R21. With this arrangement, the op amp U3 amplifies the voltage across the current detection resistor R17.

The switch 430 comprises a P-channel power FET transistor QF5 having an on-state drop voltage of about 0.014V, and a resistor R22. The drain of the FET transistor QF5 is connected via the current detection resistor R17 to the charging current control unit 410 and the source of FET transistor QF5 is connected to the output terminal 108. The gate of the FET transistor QF5 is connected to the switch controller 440. Further, the gate and the source of the transistor QF5 are connected to each other through the resistor R22.

The source and body of FET transistor QF5 are connected together. Fig. 5 shows the drain - source diode, inherent in a FET transistor, in parallel with the channel.

Two resistors R23 and R24, one capacitor C1 and an N-channel FET transistor QF6 constitute the switch controller 440. A first end of the resistor R23 is coupled to the output signal IDET from the current detector 420 and the second end of the resistor R23 is connected to the gate of the FET transistor QF6. The FET transistor QF6 has its source grounded and its drain connected to the gate of the FET transistor QF5. The source and body of FET transistor QF6 are connected together. Further, the second end of the resistor R23 is also connected to the ground through the capacitor C1 and the resistor R24 which are connected in parallel to each other.

The operation of the battery charging circuit 400 will be more fully described below.

When the AC adaptor 100 and the battery 200 are connected to the computer system, a charge status of the battery 200 is checked, such as by means of an exclusive microcomputer for the battery 200. In the case where the battery 200 needs to be charged, an operation of charging the battery 200 starts.

### Battery Charging

Once the battery charging operation starts, first, a charging current from the AC adaptor 100 is supplied to the battery 200 through the input terminal 106, the charging current control unit 410, the current detection resistor R17 and the diode D20. At this time, the current detector 420 detects whether the charging current from the charging current control unit 410 is provided. Then, the current detector 420 outputs an output signal IDET of a logic high level as a detection result, so that the FET transistor QF6 of the controller 440 is turned on. This causes a bias voltage to be applied between the gate and the source of FET transistor QF5 which is then turned on. Accordingly, almost all the current from the unit 410 is delivered to the battery 200 through the FET transistor QF5 of through the switch 430 instead of through the diode D20.

When a current from the AC adaptor 100 is supplied, first, it flows through the diode D20. Then, the current flows through the FET transistor QF5 of the switch 430 instead of through the diode D20. Therefore, power dissipation and loss by the diode D20 can be reduced, and no heat is generated by the diode D20. This will be further described below.

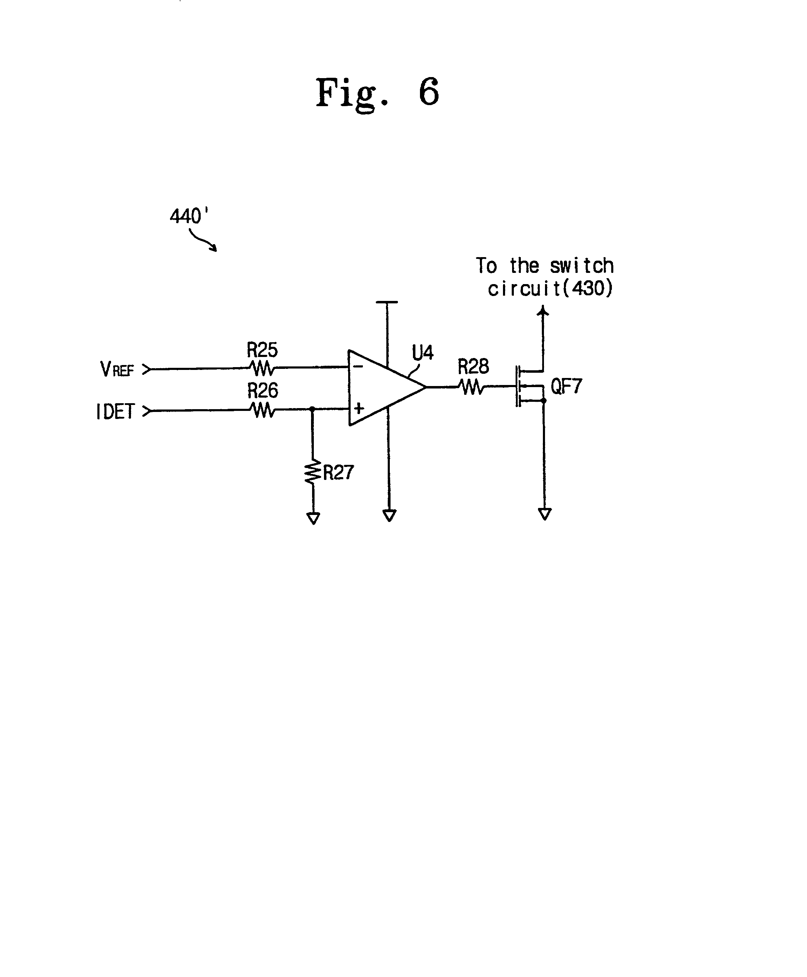

Referring to Fig. 6, another embodiment of the switch controller of the battery charging circuit is illustrated. The switch controller 440' comprises four resistors R25 to R28, one op amp U4 and an N-channel MOSFET transistor QF7 connected as illustrated in Fig. 6. When an inverting input voltage V_{REF} (such as a voltage used as a power of the microcomputer 501) of the op amp U4 is higher than a non-inverting input voltage IDET thereof, an output of the op amp U4 is at a logic low level and the FET transistor QF7 is turned off, forcing the switch 430 to be turned off. When the inverting input voltage V_{REF} is lower than the non-inverting input voltage IDET, the output of the op amp U4 is at a logic high level and the FET transistor QF7 is turned on, turning the switch 430 on.

It will be apparent that the battery charging circuit 400 having the switch controller 440' of Fig. 6 performs the same switching operation as that having the switch controller 430 of Fig. 5. The description of the battery charging circuit 400 having the controller 440' of Fig. 6 is therefore omitted.

### Effect

Suppose that a DC voltage of about 19V and a current of about 2.1A are supplied from the AC adaptor 100 and that the output wattage of the adaptor 100 is about 39.9W. As set forth above, the diodes D1 and D20 of the switch circuit 300 and the battery charging circuit 400 have forward voltage drop of about 0.5V each. The FET transistors QF1 and QF5 of the switch and battery charging circuits 300 and 400 may each have an on-state voltage drop of about 0.014V.

Under these conditions, power dissipation P_{D1} by the diode D1 when conducting 2.1A is about 1.05W (0.5V×2.1A), and a power loss rate η_{D1} is about 2.63% ((1.05W/39.9W)×100). On the other hand, a power dissipation P_{QF1} by the FET transistor QF1 when conducting 2.1A is about 0.0294W (0.014V×2.1A), and a power loss rate η_{QF1} is about 0.07% ((0.0294W/39.9W)×100). By using the switch circuit 300 according to the present invention, the power dissipation is reduced by about 1.0206W (1.05W-0.0294W) and the power efficiency is improved by about 2.56% ((1.0206W/39.9W)×100).

As well known in the art, the battery 200 may be charged in one of two principal modes; specifically, a run and charging mode wherein the battery 200 is charged regardless of the run of the computer system, and a run or charging mode in which the battery 200 is charged depending on the run of the computer system. Suppose that a current of about 1A is supplied from the AC adaptor 100 in the case of the former (the run and charging mode) and that a current of about 2.1A is supplied from the AC adaptor 100 in the case of the latter (the run or charging) mode.

Under these conditions, the power dissipation P and the power loss rate η by the diode D20 and the FET transistor QF5, when each is respectively conducting the current of 1A or 2.1A as appropriate, in the battery charging circuit 400 will be calculated as follows:
1) in the run and charging mode,${\text{P}}_{\text{D20}} \text{= V × I = 0.5V × 1A = 0.5W}$${\text{η}}_{\text{D20}} \text{= (0.5W / 39.9W) × 100 = 1.25%}$${\text{P}}_{\text{QF5}} \text{= 0.014V × 1A = 0.014W}$${\text{η}}_{\text{QF5}} \text{= (0.014W / 39.9W) × 100 = 0.04%}$
2) in the run or charging mode,${\text{P}}_{\text{D20}} \text{= V × I = 0.5V x 2.1A = 1.05W}$${\text{η}}_{\text{D20}} \text{= (1.05W / 39.9W) × 100 = 3.63%}$${\text{P}}_{\text{QF5}} \text{= 0.014V × 2.1A = 0.0294W}$${\text{η}}_{\text{QF5}} \text{= (0.0294W / 39.9W) × 100 = 0.07%}$

By using the battery charging circuit 400 in the run and charging mode, a power dissipation is reduced by about 0.486W (0.5W-0.014W) and the power efficiency is improved by about 1.22% ((0.486W/39.9W)×100). In the case of the run or charging mode, a power dissipation is reduced by about 1.0206W (1.05W-0.0294W) and the power efficiency is improved by about 2.55% ((1.0206W/39.9W)×100).

In the case of the run and charging mode, a total power dissipation Pₜ₁ by the diodes D1 and D20 is about 1.55W (1.05W (P_{D1})+0.5W (P_{D20})) and a total power loss rate ηₜ₁ by the diodes D1 and D20 is about 3.88% ((1.55W/39.9W) × 100). A total power dissipation Pₜ₁ by the FET transistor QF1 and QF5 is about 0.0434W (0.0294W(P_{QF1})+0.014W(P_{QF5})), and a total power loss rate ηₜ₂ of the FET transistors QF1 and QF5 is about 0.1% ((0.434W/39.9W)×100). Therefore, a total power dissipation is reduced by 1.5W. This enables the wattage of the AC adaptor 100 to be reduced to 38.4W from 39.9W, enabling a smaller, less expensive adaptor to be used, and reducing the amount of power consumed.

In the case of the run or charging mode, a total power dissipation Pₜ₃ by the diodes D1 and D20 is about 2.1W (1.05W(P_{D1})+1.05W(P_{D20})) and a total power loss rate ηₜ₃ of the diodes D1 and D20 is about 5.26% ((2.1W/39.9W)×100).

A total power dissipation Pₜ₄ by the FET transistor QF1 and QF5 is about 0.0588W (0.0294W(P_{QF1})+0.0294W(P_{QF5})), and a total power loss rate ηₜ₄ of the FET transistor QF1 and QF5 is about 0.15% ((0.0588W/39.9W)×100). Therefore, a total power dissipation is reduced by 2.04W. This enables the wattage of the AC adaptor 100 to be reduced to 37.86W from 39.9W, enabling a smaller, less expensive adaptor to be used, and reducing the amount of power consumed.

Furthermore, the heat generated within the computer system is also reduced. Temperature values of each component measured according to the conditions described above, that is, 39.9W, 1A (the run and charging mode) and 2.1A (the run or charging mode), when operating under a room temperature of 26°C are shown in the following tables.

**Table 1**

| | prior art | | | |
|---|---|---|---|---|
| | Run&Charging | Run or Charging | Run&Charging | Run or Charging |
| D1 | 144°C | 144°C | 26°C | |
| D20 | 85.7°C | 144°C | 26°C | |
| QF1 | | | 27.7°C | |
| QF5 | | | | 34.8°C |

**Table 2**

| | prior art | | | |
|---|---|---|---|---|
| | Run&Charging | Run or Charging | Run&Charging | Run or Charging |
| D1 | Δ118°C | Δ118°C | 0°C | 0°C |
| D20 | Δ58°C | Δ118°C | 0°C | 0°C |
| QF1 | | | Δ1.7°C | |
| QF5 | | | | Δ8.8°C |
| Sum | 176°C | 236°C | 1.7°C | 8.8°C |
| (the room temperature is deducted from each device temperature in table 2) | | | | |

As seen in the table 2, the temperature sum is reduced by about 174.3°C (176°C-1.7°C) during the run and charging mode, a temperature sum is reduced by about 227.2°C (236°C-8.8°C) during the run or charging mode.

Although the present invention has been described with reference to a certain number of particular embodiments, numerous variations and modifications may be made to the circuits of the present invention. For example, the various switches may be implemented as FET transistors (such as MOSFET or JFET transistors), bipolar transistors, mechanical switches such as relays, or other controlled conductivity devices.

The external power supply may be an AC adaptor connected to a mains AC supply, as described, or any other suitable source of power, such as a generator or a DC supply such as an external 12V battery.

Furthermore, the invention may be applied to systems having two alternative power sources, either or both of which may be an external power source or a battery. The invention may be applied to systems having more than two alternative power sources, a switching circuit being provided for at least all but one of the power sources, with appropriate control circuitry being provided.

## Claims

1. A switch circuit for use with a battery (200) and an external power supply, said switch circuit comprising:
a power supply line (104);
a diode (D1) ;
a first switch (303);
a voltage detector (302) for detecting whether a voltage supplied by an external power supply is higher than a predetermined level, and generating a detection signal (DET) as a result; and
a switch controller (304) receiving the detection signal, for controlling the ON/OFF condition of the first switch (303); **characterised in that** the diode (D1) is coupled in series between the power supply line and a terminal (101) for coupling to an external power supply; the first switch (303) is coupled in parallel with the diode, the first switch (303) having a voltage drop when conductive, lower than that of the diode (D1); the switch controller (304) controls the ON/OFF condition of said first switch (303) so as to bring said switch into an ON condition whenever the voltage supplied by the external power supply is higher than the predetermined level; and wherein said diode (D1) comprises a Schottky diode or fast recovery diode having an anode connected to said terminal (101) and a cathode connected, when said first switch (303) is in an OFF condition, to said battery; whereby said diode reduces current back flow from said battery (200) to said external power supply.

2. A switch circuit for use with a battery (200) and an external power supply, said switch circuit comprising:
a power supply line (108);
a diode (D20);
a first switch (430); and
a switch controller (440) receiving a detection signal, for controlling the ON/OFF condition of said switch (430) **characterised in that** said diode (D20) is coupled in series between the power supply line and a terminal (106) for coupling to an external power supply; said first switch (430) is coupled in parallel with said diode (D20), the switch having a voltage drop when conductive, lower than that of the diode; the switch further comprising a current detector (420) for detecting whether a current supply by an external power supply is higher than a predetermined level, and generating the detection signal as a result so as to bring said switch (430) into an ON condition whenever the current supplied by the external power supply is higher than the predetermined level; and wherein said diode (D20) comprises a Schottky diode or fast recovery diode having an anode connected to said terminal (106) and a cathode connected, when said first switch (430) is in an OFF condition, to said battery (200); whereby said diode (D20) reduces current back flow from said battery (200) to said external power supply.

3. The switch circuit according to claim 1 or claim 2, further comprising:
a second switch (305) for coupling the power supply line to a battery; and
a second switch controller (306) receiving the detection signal, for controlling the ON/OFF condition of the second switch so as to bring the second switch into an OFF condition whenever the voltage or current supplied by the external power supply is higher than the respective predetermined level.

4. A system, comprising:
a switch circuit according to any of claims 1-3;
a system load (521);
a battery (200); and
an external power supply,
wherein power may be supplied to the system load over the power supply line, from either the battery or the external power supply, according to a status of the switching circuit.

5. A system according to claim 4, further comprising a voltage converter coupled to the system load, for controlling a voltage supplied to the system load.

6. A system according to claim 4 or claim 5 being a computer system, wherein the system load comprises a memory, a direct memory access controller and a peripheral.

7. A system according to claim 4, claim 5 or claim 6, being a portable system.

8. A battery charging circuit comprising:
a first terminal (106) for coupling to an external power supply;
a second terminal (108) for coupling to a battery (200); and
a switch circuit according to claim 1, or claim 2, or claim 3, wherein the diode and the power supply line are coupled in series between the first terminal and the second terminal.

9. A method of operating a switch circuit for providing power from a power supply (100) to a power supply
a diode (D1); and
a first switch (303)
the method comprising the steps of:
detecting whether a voltage, or a current, supplied by the power supply is higher than a predetermined level; and
controlling the ON/OFF condition of the first switch; **characterised in that** said diode (D1) is coupled in series between the power supply line and a terminal (101) for coupling to the power supply and the switch (303) is coupled in parallel with said diode (D1), the switch having a voltage drop when conductive, lower than that of said diode (D1) wherein the method further comprises the step of controlling the ON/OFF condition of said first switch (303) so as to bring the switch into an ON condition whenever the voltage, or current, respectively, supplied by the external power supply is higher than the predetermined level; and wherein said diode (D1) comprises a Schottky diode or fast recovery diode having an anode connected to said terminal (101) and a cathode connected, when said first switch (303) is in an OFF condition, to said battery (200); whereby said diode (D1) reduces current back flow from said battery (200) to said external power supply.

## Patentansprüche

1. Ein Schaltstromkreis für den Einsatz mit einer Batterie (200) und einem externen Netzanschluss, wobei der besagte Schaltstromkreis folgendes umfasst:
eine Netzanschlussleitung (104);
eine Diode (D1);
einen ersten Schalter (303);
einen Spannungsprüfer (302), der prüft, ob eine durch einen externen Netzanschluss gelieferte Spannung ein vorher festgelegtes Niveau überschreitet und dementsprechend ein Prüfsignal (DET) erzeugt; und
einen Schaltregler (304), der das Prüfsignal empfängt, um den EIN/AUS-Zustand des ersten Schalters (303) zu regeln; **dadurch gekennzeichnet, dass** die Diode (D1) zwischen der Netzanschlussleitung und einem Anschluss (101) hintereinander geschaltet ist, um mit einem externen Netzanschluss geschaltet zu werden; der erste Schalter (303) ist mit der Diode parallel geschaltet, wobei der erste Schalter (303) wenn leitend einen Spannungsabfall verzeichnet, der niedriger ist als der der Diode (D1); der Schaltregler regelt (304) den EIN/AUS-Zustand des besagten ersten Schalters (303), um den besagten Schalter dann in den EIN-Zustand zu versetzen, wenn die durch den externen Netzanschluss gelieferte Spannung das vorher festgelegte Niveau überschreitet; und wobei die besagte Diode (D1) eine Schottky-Diode oder schnelle Diode umfasst, die über eine Anode an den besagten Anschluss (101) angeschlossen ist und eine Kathode, die, wenn sich der besagte erste Schalter (303) im AUS-Zustand befindet, an die besagte Batterie angeschlossen ist; wobei die besagte Diode den Stromrückfluss von besagter Batterie (200) zu besagtem externen Netzanschluss reduziert.

2. A Schaltstromkreis für den Einsatz mit einer Batterie (200) und einem externen Netzanschluss, wobei der besagte Schaltstromkreis folgendes umfasst:
eine Netzanschlussleitung (108);
eine Diode (D20);
einen ersten Schalter (430); und
einen Schaltregler (440), der ein Prüfsignal empfängt, um den EIN/AUS-Zustand des besagten Schalters (430) zu regeln, **dadurch gekennzeichnet, dass** die besagte Diode (D20) zwischen der Netzanschlussleitung und einem Anschluss (106) hintereinander geschaltet ist, um mit einem externen Netzanschluss geschaltet zu werden; der besagte erste Schalter (430) ist mit der besagten Diode (D20) parallel geschaltet, wobei der Schalter wenn leitend einen Spannungsabfall verzeichnet, der niedriger ist als der der Diode; wobei der Schalter außerdem einen Stromprüfer (420) umfasst, um zu prüfen, ob eine Stromzuführung durch einen externen Netzanschluss ein vorher festgelegtes Niveau überschreitet und dementsprechend ein Prüfsignal erzeugt, um den besagten Schalter (430) dann in den EIN-Zustand zu versetzen, wenn der durch den externen Netzanschluss gelieferte Strom das vorher festgelegte Niveau überschreitet; und wobei die besagte Diode (D20) eine Schottky-Diode oder schnelle Diode umfasst, mit einer Anode, die an den besagten Anschluss (106) angeschlossen ist und einer Kathode, die, wenn sich der besagte erste Schalter (430) im AUS-Zustand befindet, an die besagte Batterie (200) angeschlossen ist; wobei die besagte Diode (D20) den Stromrückfluss von besagter Batterie (200) zu besagtem externen Netzanschluss reduziert.

3. Der Schaltstromkreis gemäß Anspruch 1 oder Anspruch 2, außerdem folgendes umfassend:
einen zweiten Schalter (305), der die Netzanschlussleitung mit der Batterie schaltet; und
einen zweiten Schaltregler (306), der das Prüfsignal empfängt, um den EIN/AUS-Zustand des zweiten Schalters so zu regeln, dass der zweite Schalter immer dann in einen AUS-Zustand versetzt wird, wenn die oder der durch den externen Netzanschluss gelieferte Spannung oder Strom das jeweils vorher festgelegte Niveau überschreitet.

4. Ein System, folgendes umfassend:
einen Schaltstromkreis gemäß einem der Ansprüche 1 - 3;
eine Systemlast (521);
eine Batterie (200); und
einen externen Netzanschluss,
wobei Energie über die Netzanschlussleitung an die Systemlast geliefert werden kann, was gemäß einem Status des Schaltstromkreises entweder von der Batterie oder dem externen Netzanschluss aus geschehen kann.

5. Ein System gemäß Anspruch 4, das außerdem einen Spannungswandler umfasst, der mit der Systemlast geschaltet ist, um eine an die Systemlast gelieferte Spannung zu regeln.

6. Ein System gemäß Anspruch 4 oder Anspruch 5, **dadurch gekennzeichnet, dass** es ein Computer-System ist, wobei die Systemlast einen Speicher, eine direkte Speicherzugriffssteuerung und ein Peripheriegerät umfasst.

7. Ein System gemäß Anspruch 4, Anspruch 5 oder Anspruch 6, **dadurch gekennzeichnet, dass** es ein tragbares System ist.

8. Ein Batterieladekreis, folgendes umfassend:
einen ersten Anschluss (106), um mit einem externen Netzanschluss geschaltet zu werden;
einen zweiten Anschluss (108), um mit einer Batterie (200) geschaltet zu werden; und
einen Schaltstromkreis gemäß Anspruch 1, Anspruch 2 oder Anspruch 3,
wobei die Diode und die Netzanschlussleitung zwischen dem ersten Anschluss und dem zweiten Anschluss hintereinander geschaltet sind.

9. Ein Verfahren zum Betrieb eines Schaltstromkreises, um Energie von einem Netzanschluss (100) an einen Netzanschluss zu liefern
eine Diode (D1); und
einen ersten Schalter (303)
wobei das Verfahren die folgenden Schritte umfasst:
zu prüfen, ob eine Spannung oder ein Strom, die von einem Netzanschluss geliefert werden, ein vorher festgelegtes Niveau überschreiten; und den EIN/AUS-Zustand des ersten Schalters zu regeln; **dadurch gekennzeichnet, dass** die besagte Diode (D1) zwischen der Netzanschlussleitung und einem Anschluss (101) hintereinander geschaltet ist, um mit einem Netzanschluss geschaltet zu werden und der Schalter (303) mit der besagten Diode (D1) parallel geschaltet ist, wobei der Schalter wenn leitend einen Spannungsabfall verzeichnet, der niedriger ist als der der besagten Diode (D1), wobei das Verfahren außerdem den Schritt der Regelung des EIN/AUS-Zustands des besagten ersten Schalters (303) umfasst, um den Schalter immer dann in einen EIN-Zustand zu versetzen, wenn jeweils die Spannung oder der Strom, die von einem externen Netzanschluss geliefert werden, das vorher festgelegte Niveau überschreiten; und wobei die besagte Diode (D1) eine Schottky-Diode oder schnelle Diode umfasst, mit einer Anode, die an den besagten Anschluss (101) angeschlossen ist und einer Kathode, die, wenn sich der besagte erste Schalter (303) in einem AUS-Zustand befindet, an die besagte Batterie (200) angeschlossen ist; wobei die besagte Diode (D1) den Stromrückfluss von besagter Batterie (200) zu besagtem externen Netzanschluss reduziert.

## Revendications

1. Circuit de commutation à utiliser avec une batterie (200) et une alimentation externe, ledit circuit de commutation comprenant :
une ligne d'alimentation (104) ;
une diode (D1) ;
un premier commutateur (303) ;
un détecteur de tension (302) pour détecter si une tension fournie par une alimentation externe est supérieure à un niveau prédéterminé et produisant en conséquence un signal de détection (DET) ; et
un contrôleur de commutation (304) recevant le signal de détection, pour commander l'état en circuit/hors circuit du premier commutateur (303) ; **caractérisé en ce que** la diode (D1) est couplée en série entre la ligne d'alimentation et une borne (101) pour le couplage à une alimentation externe ; le premier commutateur (303) est couplé en parallèle avec la diode, ce premier commutateur (303) ayant une chute de tension, lorsqu'il est conducteur, inférieure à celle de la diode (D1); le contrôleur de commutation (304) commande l'état en circuit/hors circuit dudit premier commutateur (303) de façon à mettre ledit commutateur dans un état en circuit chaque fois que la tension fournie par l'alimentation externe est supérieure au niveau prédéterminé ; et dans lequel ladite diode (D1) comprend une diode Schottky ou une diode à court temps de transition ayant une anode connectée à ladite borne (101) et une cathode connectée, lorsque ledit premier commutateur (303) est dans un état hors circuit, à ladite batterie ; au moyen duquel ladite diode réduit le retour de courant depuis ladite batterie (200) vers ladite alimentation externe.

2. Circuit de commutation à utiliser avec une batterie (200) et une alimentation externe, ledit circuit de commutation comprenant :
une ligne d'alimentation (108) ;
une diode (D20) ;
un premier commutateur (430) ;
un contrôleur de commutation (440) recevant un signal de détection, pour commander l'état en circuit/hors circuit dudit commutateur (430) ; **caractérisé en ce que** ladite diode (D20) est couplée en série entre la ligne d'alimentation et une borne (106) pour le couplage à une alimentation externe ; ledit premier commutateur (430) est couplé en parallèle avec ladite diode (D20), ce commutateur ayant une chute de tension, lorsqu'il est conducteur, inférieure à celle de la diode ; ce commutateur comprenant également un détecteur de courant (420) pour détecter si un courant fourni par une alimentation externe est supérieur à un niveau prédéterminé, et produisant en conséquence le signal de détection de façon à mettre ledit commutateur (430) dans un état en circuit chaque fois que le courant fourni par l'alimentation externe est supérieur au niveau prédéterminé ; et dans lequel ladite diode (D20) comprend une diode Schottky ou une diode à court temps de transition ayant une anode connectée à ladite borne (106) et une cathode connectée, lorsque ledit premier commutateur (430) est dans un état hors circuit, à ladite batterie (200) ; au moyen duquel ladite diode (D20) réduit le retour de courant depuis ladite batterie (200) vers ladite alimentation externe.

3. Le circuit de commutation selon la revendication 1 ou la revendication 2, comprenant également :
un deuxième commutateur (305) pour coupler la ligne d'alimentation à une batterie ; et
un deuxième contrôleur de commutation (306) recevant le signal de détection, pour commander l'état en circuit/hors circuit du deuxième commutateur afin de mettre ce deuxième commutateur dans un état hors circuit chaque fois que la tension ou le courant fourni par l'alimentation externe est supérieur au niveau prédéterminé respectif.

4. Système comprenant :
un circuit de commutation selon l'une quelconque des revendications 1-3 ;
une charge du système (521) ;
une batterie (200) ; et
une alimentation externe,
dans laquelle un courant peut être alimenté à la charge du système sur la ligne d'alimentation, depuis soit la batterie, soit l'alimentation externe, selon un état du circuit de commutation.

5. Système selon la revendication 4, comprenant également un convertisseur de tension couplé à la charge du système, pour régler une tension fournie à la charge du système.

6. Système selon la revendication 4 ou la revendication 5, qui est un système informatique, dans lequel la charge du système comprend une mémoire, un contrôleur d'accès direct à la mémoire et un périphérique.

7. Système selon la revendication 4, la revendication 5 ou la revendication 6, qui est un système portable.

8. Circuit de charge de la batterie comprenant :
une première borne (106) pour le couplage à une alimentation externe ;
une deuxième borne (108) pour le couplage à une batterie (200) ; et
un circuit de commutation selon la revendication 1, ou la revendication 2, ou la revendication 3, dans lequel la diode et la ligne d'alimentation sont couplées en série entre la première borne et la deuxième borne.

9. Méthode d'utilisation d'un circuit de commutation pour fournir du courant d'une alimentation (100) à une alimentation
une diode (D1) ; et
un premier commutateur (303),
cette méthode comprenant les opérations suivantes :
détecter si une tension ou un courant, fourni par l'alimentation, est supérieur à un niveau prédéterminé ; et
commander l'état en circuit/hors circuit du premier commutateur ; opération **caractérisée en ce que** ladite diode (D1) est couplée en série entre la ligne d'alimentation et une borne (101) pour le couplage à la ligne d'alimentation, et le commutateur (303) est couplé en parallèle avec ladite diode (D1), ce commutateur ayant une chute de tension, lorsqu'il est conducteur, inférieure à celle de ladite diode (D1), la méthode comprenant également l'opération de commander l'état en circuit/hors circuit dudit premier commutateur (303) de façon à mettre ce commutateur dans un état en circuit chaque fois que la tension, ou le courant, respectivement, fourni par l'alimentation externe, est supérieur au niveau prédéterminé ; et dans laquelle ladite diode (D1) comprend une diode Schottky ou une diode à court temps de transition ayant une anode connectée à ladite borne (101) et une cathode connectée, lorsque ledit premier commutateur (303) est dans un état hors circuit, à ladite batterie (200) ; au moyen de laquelle ladite diode (D1) réduit le retour de courant depuis ladite batterie (200) vers ladite alimentation externe.
